# EUROPÄISCHE PATENTSCHRIFT

(11) **EP 3 697 586 B1**
(45) Veröffentlichungstag und Bekanntmachung des Hinweises auf die Patenterteilung: **07.06.2023**
(21) Anmeldenummer: 18795327.8
(22) Anmeldetag: 18.10.2018
(51) Int. Cl.: B29B 7/40, B29B 7/58, B29B 7/72, B29B 7/76

(54) **VORRICHTUNG ZUM MISCHEN VON ZWEI ODER MEHR KOMPONENTEN, SOWIE VERFAHREN ZUR KALIBRIERUNG EINER SOLCHEN**
DEVICE FOR MIXING TWO OR MORE COMPONENTS, AND METHODS FOR CALIBRATING SUCH A DEVICE
DISPOSITIF POUR MÉLANGER DEUX CONSTITUANTS OU PLUS AINSI QUE PROCÉDÉS POUR L'ÉTALONNAGE D'UN TEL DISPOSITIF

(30) Priorität: 20.10.2017 DE 102017009776; 11.10.2018 DE 102018008035
(43) Veröffentlichungstag der Anmeldung: 26.08.2020
(73) Patentinhaber: Hilger u. Kern GmbH, 68167 Mannheim (DE)
(72) Erfinder: STERN, Nicolai, 68165 Mannheim (DE); ARTMEIER, Wolfgang, 68309 Mannheim (DE)
(74) Vertreter: Kesselhut, Wolf
(86) Internationale Anmeldenummer: PCT/EP2018/078478
(87) Internationale Veröffentlichungsnummer: WO 2019/077016

(56) Entgegenhaltungen:
- WO-A1-2013/149273
- WO-A1-2017/004637
- WO-A1-2017/004641
- DE-A1- 4 235 850
- DE-A1- 19 848 357
- DE-A1-102012 002 047
- US-A- 5 902 042
- Wikipedia: "Schrittmotor", , 24. August 2017 (2017-08-24), Seiten 1-5, XP002786734, Internet Gefunden im Internet: URL:https://web.archive.org/web/2017082409 5340/https://de.wikipedia.org/wiki/Schritt motor [gefunden am 2018-11-22]

## Beschreibung

Die Erfindung betrifft eine Vorrichtung zum Mischen von zwei oder mehr Komponenten sowie Verfahren zur Kalibrierung einei solchen.

Eine derartige Vorrichtung, mit der sich beispielsweise die zwei oder mehr Komponenten eines Mehrkomponenten-Kunststoffgemischs, wie beispielsweise eines Klebstoffs, miteinander vermischen lassen, ist aus der DE 42 35 850 A1 bekannt. Die dort beschriebene Vorrichtung umfasst eine Mischkammer mit zwei Zufuhrkanälen zur Zufuhr der zu vermischenden Komponenten, in der ein Mischelement angeordnet ist. Das Mischelement, das in der vorliegenden Anmeldung auch als Mischkopf bezeichnet wird, wird durch einen Motor über eine Antriebswelle rotiert und kann über eine Hubeinrichtung in axialer Richtung aus einer Freigabeposition in eine Schließposition verfahren werden. In der Schließposition verschließt die Spitze des Mischelements eine am Boden der Mischkammer angeordnete Auslassöffnung für das fertig gemischte Mehrkomponentengemisch. Zur Bewegung des mit der Antriebswelle gekoppelten Mischelements umfasst die Hubeinrichtung einen in einem Zylinder geführten Kolben, der über ein Kugellager in Umfangsrichtung drehbar und in axialer Richtung gestellfest mit der Antriebswelle gekoppelt ist. Aufgrund der pneumatischen oder hydraulischen Betätigung des Kolbens innerhalb des Zylinders lässt sich das Mischelement lediglich aus der Schließposition in die Freigabeposition verfahren, ohne dass beispielsweise die Bewegungsgeschwindigkeit oder der Bewegungsweg nach einem vorgegebenen Bewegungsprofil verändert werden können. Hierdurch ist es mit der Anordnung nicht möglich, die Menge des während des Öffnungs- und Schließvorgangs aus der Auslassöffnung austretenden Mehrkomponentengemischs, welches auch durch die Hubbewegung beeinflusst wird, entsprechend einem gewünschten Mengenprofil zu verändern, um beispielsweise bei zwei überlappenden Klebstoffraupen auch im Überlappungsbereich eine konstante Klebstoffmenge sicherzustellen. Darüber hinaus ist hierdurch das Dichtelement, an welchem die Spitze des Mischelements beim Schließen der Auslassöffnung anliegt, vergleichsweise großen mechanischen Belastungen ausgesetzt, was zu einem hohen Verschleiß führt.

Weiterhin beschreibt die WO 2017/004637 A1 eine Mischvorrichtung, welche eine in einem Gehäuse aufgenommene Mischkammer besitzt, in der ein Mischkopf zum Verschließen und Freigeben einer Austrittsöffnung für die fertig gemischten Komponenten am unteren Ende der Mischkammer angeordnet ist. Der Mischkopf wird durch eine Antriebswelle und einen Motor rotiert, und kann in axialer Richtung durch eine Verstellvorrichtung auf- und ab bewegt werden, um die Größe einer im unteren Bereich der Mischammer angeordneten Ausbringöffnung zu verändern. Die axiale Aufwärtsbewegung des Mischkopfes wird durch die Zufuhr von Druckluft in den Bereich oberhalb einer die Antriebswelle dichtenden Dichtung bewirkt, welche auf die Stirnfläche eines Radialkugellagers wirkt, das fest mit der Antriebswelle verbunden ist und zusammen mit der Antriebswelle des Mischkopfes innerhalb des Gehäuses in axialer Richtung bewegt wird. Aufgrund der Druckluftbetätigung erlaubt die Vorrichtung keine feinfühlige Veränderung des aus der Austrittsöffnung austretenden Volumenstroms im Falle einer nahezu vollständig geschlossenen Austrittsöffnung.

Demgemäß ist es eine Aufgabe der vorliegenden Erfindung, eine Vorrichtung zum Mischen von zwei oder mehr Komponenten sowie ein Verfahren zur Kalibrierung einer solchen zu schaffen, welche die zuvor genannten Nachteile überkommen.

Diese Aufgabe wird erfindungsgemäß durch eine Vorrichtung nach Anspruch 1 und Verfahren nach den Ansprüchen 10 und 12 gelöst.

Weitere Merkmale der Erfindung sind in den Unteransprüchen beschrieben.

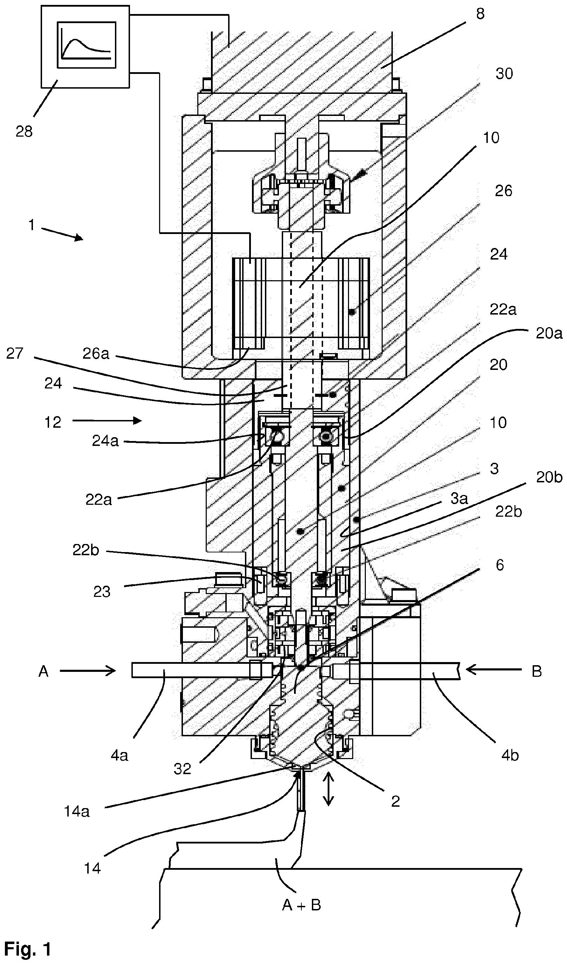

Die Erfindung wird nachfolgend mit Bezug auf die einzige Zeichnung anhand bevorzugter Ausführungsformen beschrieben. In der Zeichnung zeigt
Fig. 1 eine schematische Darstellung einer erfindungsgemäßen Vorrichtung zum Mischen von zwei oder mehr Komponenten.

Wie in Fig. 1 gezeigt ist, umfasst eine Vorrichtung 1 zum Mischen von zwei- oder mehr Komponenten A, B, insbesondere eines Kunststoffgemisches wie beispielsweise Zwei-Komponenten-Epoxidharzkleber, Zwei-Komponenten-PUR Kleber, Zwei-Komponenten-PUR Montage- oder Dichtschaum eine gestellfest in einem Gehäuse 3 aufgenommene Mischkammer 2, die wenigstens zwei Zufuhrkanäle 4a, 4b aufweist, über die die zu vermischenden Komponenten A, B in die Mischkammer 2 zuführbar sind. Die Vorrichtung 1 umfasst weiterhin ein in der Mischkammer 2 angeordnetes Mischelement 6, welches auch als Mischkopf bezeichnet wird und welches durch einen ersten Motor 8 über eine Antriebswelle 10 rotierbar ist, wobei das Mischelement 6 zum Mischen der zwei oder mehr Komponenten A, B in der Mischkammer 2 dient. Der Motor 8 ist beispielsweise oberhalb der Mischkammer 2 am Gehäuse 3 aufgenommen, vorzugsweise in einer axialen Verlängerung des Mischelements 6.

Die Vorrichtung 1 umfasst weiterhin eine Hubeinrichtung 12, mittels welcher das Mischelement 6 innerhalb der Mischkammer 2 zum Verschließen einer im Bewegungs- bzw. Verschiebeweg des Mischelements 6 angeordneten Auslassöffnung 14 aus einer Freigabeposition in axialer Richtung relativ zur Mischkammer 2 in eine Schließposition verfahrbar ist, aus der es im Anschluss daran in umgekehrter Richtung wieder zurück in die Freigabeposition verfahren werden kann.

Die Hubeinrichtung 12 umfasst eine Hubhülse 20, die relativ zur Antriebswelle 10 drehbar und in axialer Richtung gegenüber der Antriebswelle 10 positionsfest über Lager 22a, 22b an dieser aufgenommen ist. Dabei ist die Hubhülse 20 in Umfangsrichtung gegenüber dem Gehäuse 3 drehfest und in axialer Richtung verschiebbar mit dem Gehäuse 3 gekoppelt, so dass ein axiales Verschieben beziehungsweise Positionieren der Hubhülse 20 gegenüber dem Gehäuse 3 ermöglicht wird.

Die Hubhülse 20 umfasst einen Gewindeabschnitt 20a, welcher mit einem komplementären Gewindeabschnitt 24a einer Gewindehülse 24 in Eingriff ist, die durch einen zweiten, am Gehäuse 3 aufgenommenen Antriebsmotor 26 angetrieben wird. Die Gewindehülse 24 ist in axialer Richtung positionsfest mit der Antriebswelle 27 des zweiten Antriebsmotors 26 gekoppelt. Wie in Fig. 1 gezeigt, erstreckt sich die Antriebswelle 10 vorzugsweise durch das Drehzentrum der Gewindehülse 24, wodurch eine sehr kompakte Bauweise erhalten wird.

Die erfindungsgemäße Vorrichtung 1 besitzt den Vorteil, dass die Hubhülse 20 mittels einer Drehbewegung der Antriebswelle 27 über die komplementären Gewindeabschnitte 20a, 24a mit hoher Präzision in axialer Richtung verschoben bzw. positioniert werden kann, in der Art, dass der translatorisch feststehende Gewindeabschnitt 24a bei einer Drehung der Gewindehülse 24 durch den zweiten Antriebsmotor 26 den rotatorisch fixierten Gewindeabschnitt 20a translatorisch über den Gewindeeingriff bewegt. Dadurch kann die Antriebswelle 10 mit dem rotatorisch gekoppelten Mischelement 6 von der Freigabeposition in die Schließposition verfahren werden und umgekehrt. Darüber hinaus sind auch Stellungen des Mischelements 6 zwischen der Freigabe- und Schließposition möglich, z.B. um den Volumenstrom des ausgebrachten Gemisches der Komponenten A, B feinfühlig elektronisch geregelt, bzw. gesteuert, zu dosieren.

Die erfindungsgemäße Vorrichtung 1 sieht vor, dass sich die Antriebswelle 10 des Mischelements 6 durch das Drehzentrum des zweiten Antriebsmotors 26 hindurch erstreckt, und dass das Gehäuse 26a des zweiten Antriebsmotors 26 gestellfest mit der Mischkammer 2, bzw. dem Gehäuse 3, gekoppelt ist. Dadurch ergibt sich ein einfacher und besonders kompakter Aufbau des Hubmechanismus, über den das Mischelement 6 axial in die gewünschte Position verfahrbar ist.

Bei der in Fig. 1 gezeigten bevorzugten Ausführungsform der Erfindung ist die Antriebswelle 27 des zweiten Antriebsmotors 26 eine Hohlwelle, mit der die Gewindehülse 24 drehfest und in axialer Richtung unverschiebbar gekoppelt, d.h. translatorisch verbunden ist. Dadurch ergibt sich der Vorteil, dass die beiden Antriebsmotoren 8, 26 übereinander entlang einer Achse angeordnet werden können, was eine elegante, besonders schmal bauende Konstruktion der Vorrichtung erlaubt.

Nach einem weiteren Gedanken der Erfindung kann die Hubhülse 20 über Radialkugellager 22a, 22b koaxial auf der Antriebswelle 10 gelagert sein. Die Außenseite der Hubhülse 20 umfasst hierbei eine zylindermantelformige Gleitfläche 20b, über welche sie in axialer Richtung verschiebbar innerhalb einer korrespondierend zur Gleitfläche 20b geformten Innenfläche 3a des Gehäuses 3 geführt wird, in welchem die Mischkammer 2 aufgenommen ist. Hierdurch lässt sich bei einem minimalen radialen Platzbedarf eine hochpräzise radiale Führung des Mischelements 6 erhalten, durch die sich die Dosiergenauigkeit weiter erhöht.

Obgleich die Gewindehülse 24 auch mit einem Außengewinde und die Hubhülse 20 mit einem Innengewinde versehen sein kann, weist die Gewindehülse 24 bei der bevorzugten Ausführungsform der Erfindung ein Innengewinde und die Hubhülse 20 ein Außengewinde auf, wodurch sich der Vorteil ergibt, dass das obere Radialkugellager 22a platzsparend und geschützt innerhalb der Hubhülse 20 in Höhe Außengewindes angeordnet werden kann. Hierdurch lässt sich der Durchmesser der Hubhülse 20 und auch der Gewindehülse 24 in vorteilhafter Weise weiter reduzieren, bzw. bei vorgegebenen Außenabmessungen die Stabilität in vorteilhafter Weise erhöhen.

Nach einer weiteren Ausführungsform der Erfindung kann es vorgesehen sein, dass der erste Antriebsmotor 8 über eine längenveränderliche Kupplung 30 mit dem Ende der Antriebswelle 10 gekoppelt ist, welche dem Mischelement 6 gegenüber liegt. Dies ermöglicht ein Verschieben des Mischelements 6, während die Antriebswelle 10 durch den Antriebsmotor 8 angetrieben wird, ohne dass der Antriebsmotor 8 als solcher mit auf- und ab bewegt werden muss.

Nach einem weiteren der Erfindung zugrunde liegenden Gedanken weist das Mischelement 6 eine sich in Richtung zur Auslassöffnung 14 hin verjüngende konische Form auf; und die Auslassöffnung 14 besitzt auf der Innenseite der Mischkammer 2 einen ringförmigen Aufnahmesitz 14a, in welchem ein nicht näher gezeigtes Gleitelement, insbesondere ein Gleitring, aufnehmbar ist, auf dem sich das Mischelement 6 in der Schließposition mit seiner Spitze dichtend abstützt. Durch diese Konstruktion lässt sich beim Einsatz eines Gleitelements aus einem federelastischen Material, bzw. einem durch eine federelastische Kraft in Aufwärtsrichtung beaufschlagten verschiebbaren Gleitelement, auch bei sehr abrasiven Komponenten ein unbeabsichtigtes Austreten des Gemisches der Komponenten A, B aus der Mischkammer 2 über einen langen Zeitraum hinweg zuverlässig verhindern.

Bei der bevorzugten Ausführungsform der erfindungsgemäßen Vorrichtung 1 ist der erste Antriebsmotor 8 und/oder der zweite Antriebsmotor 26 bevorzugt ein Schrittmotor, ein Servomotor oder ein bürstenloser Gleichstrommotor, der jeweils durch eine elektronische Steuerungs- und Regelungseinrichtung 28 gemäß einem vorgegebenen Geschwindigkeitsprofil antreibbar ist. Hierbei stellt es einen besonderen Vorteil der Erfindung dar, dass der Mischkopf 6 durch die Verwendung eines solchen Motors nicht nur in Abhängigkeit von der jeweiligen Mischanwendung mit einem passenden, bevorzugt abgespeicherten Geschwindigkeitsprofil angetrieben werden kann, sondern dass auch eine Drehpositionierung des Motors 8, und damit eine exakte Winkelpositionierung des Mischelements 6, ermöglicht wird, die es dem Benutzer erlaubt, das Mischelement 6 beim Anfahren der Schließposition mit großer Genauigkeit in der Endposition zu positionieren. Hierdurch ergibt sich in vorteilhafter Weise die Möglichkeit einer flexiblen und hochpräzisen Dosierung der gemischten Komponenten über einen vollständigen Dosierzyklus in Verbindung mit einer beachtlichen Verringerung des Verschleißes der erfindungsgemäßen Vorrichtung 1.

Nach einem weiteren der Erfindung zugrunde liegenden Gedanken ist der zweite Antriebsmotor 26 auf der Basis eines extern zugeführten Start- und/oder Stoppsignals einer übergeordneten Maschinensteuerungseinrichtung nach einem vorgegebenen Drehzahlprofil aus der Schließposition in die Freigabeposition und/oder aus der Freigabeposition in die Schließposition verfahrbar. Dies hat den Vorteil, dass die Vorrichtung 1 automatisierbar ist und beispielsweise mittels der Maschinensteuerung in ein Produktionsleitsystem eingebunden werden kann.

Weiterhin kann es vorgesehen sein, dass dem zweiten Antriebsmotor 26 ein Sensor zur Erfassung der Drehposition des Antriebsmotors 26 und/oder der Antriebswelle 27 zugeordnet sein. Alternativ besteht die Möglichkeit, bei der Verwendung eines Schrittmotors auf einfache Weise die Anzahl der Ansteuerungsschritte zu zählen, was in vorteilhafter Weise eine kostengünstige Möglichkeit eröffnet, die Drehposition des Motors 8, 26, bzw. des Mischelements 6 durch Zählen der benötigten Schritte zu bestimmen.

Das erfindungsgemäße Verfahren zur Kalibrierung, durch welches sich die Genauigkeit bei der Steuerung und/oder Regelung der Dosiermenge beim Einsatz der erfindungsgemäßen Vorrichtung 1 in vorteilhafter Weise beachtlich erhöhen lässt, wird nachfolgend anhand der in Fig. 1 gezeigten erfindungsgemäßen Vorrichtung 1 beispielhaft beschrieben.

Das erfindungsgemäße Verfahren umfasst hierbei die folgenden Verfahrensschritte:
a) Verfahren des Mischelements 6 in die Schließposition und Messen des dem zweiten Antriebsmotor 26 zugeführten Motorstroms.
   Dazu wird der zweite Antriebsmotor 26 derart angetrieben, dass das Mischelement 6 durch die komplementären Gewindeabschnitte 20a, 24a in Richtung der Auslassöffnung 14, d.h. in Richtung der Schließposition, bewegt wird.
b) Anhalten des zweiten Antriebsmotors 26, wenn der Motorstrom einen vorgegebenen Schwellenwert überschreitet. Dabei wird der Schwellenwert für den Motorstrom vorzugsweise so gewählt, dass dieser größer ist, vorzugsweise mindestens doppelt so groß, wie der Motorstrom, der zum Verfahren des rotierenden Mischelements 6 beim Zuführen der Komponenten A, B in die Mischkammer 2 benötigt wird. Dies hat den Vorteil, dass der Schwellenwert für den Motorstrom nicht durch den Widerstand der Komponenten A, B während des Mischbetriebs erreicht, bzw. beeinflusst wird.
c) Abspeichern der Drehposition des zweiten Antriebsmotors 26 als neue Schließposition. Dies hat den Vorteil, dass durch einen einfachen Soll-Ist Vergleich ein sicheres Schließen der Auslassöffnung 14 gewährleistet und eine Fehlermeldung ausgegeben werden kann, wenn die Position abzüglich einer Toleranz nicht erreicht wird.
d) Rotieren des zweiten Antriebsmotors 26 in der entgegengesetzten Drehrichtung, um eine vorgegebene Anzahl von Umdrehungen und Abspeichern der Position als neue Freigabeposition. Hierdurch ergibt sich der Vorteil, dass ein sicheres Öffnen der Auslassöffnung 14 durch einen im Betrieb stattfindenden Soll-Ist-Vergleich gewährleistet werden kann. Falls das Mischelement 6 in der Mischkammer 2 verklemmt oder verklebt sein sollte und die Freigabeposition nicht erreicht werden kann, kann beispielsweise ein Fehlersignal ausgegeben werden.

Nach einer weiteren Ausführungsform des erfindungsgemäßen Verfahrens wird in der abgespeicherten neuen Freigabeposition der Volumenstrom des aus der Auslassöffnung 14 austretenden gemischten Materials ermittelt und der ermittelte Wert in einem Speicher abgelegt. Hierdurch kann beispielsweise beim Auftragen von Klebstoffraupen in vorteilhafter Weise ein gleichbleibendes Klebstoffvolumen sichergestellt werden. Des Weiteren kann zwischen der Schließ- und der Freigabeposition der Volumenstrom für Zwischenpositionen abgeschätzt, bzw. durch die elektronische Steuerungs- und Regelungseinrichtung 28 ermittelt werden, z.B. durch Inter- oder Extrapolation.

Nach einer weiteren alternativen Ausführungsform der Erfindung kann das Verfahren zur Kalibrierung der Dosiermenge auch folgendermaßen ausgestaltet sein:
a) Verfahren des Mischelements 6 in die maximale Öffnungsposition und Messen der Position, wenn die mechanisch vorgegebene maximale Position erreicht ist.
   Dazu wird der zweite Antriebsmotor 26 in der Weise angetrieben, dass das Mischelement 6 durch die komplementären Gewindeabschnitte 20a, 24a in Richtung des Antriebsmotors 8, d.h. von der Schließposition, weg bis zum maximalen Hub bewegt wird. Bevorzugter Weise wird der Bewegungsweg des Mischelements 6 durch einen mechanischen Anschlag 32 begrenzt, an dem z.B. die in Fig. 1 durch eine horizontale Linie angedeutete Oberseite des Mischelements 6 beim Erreichen der maximalen Hubhöhe anschlägt. Die maximal erreicht Hubhöhe wird erfasst und gespeichert. Dies kann z.B. durch Ablegen eines zugehörigen Positionswertes, z.B. der von einem dem Mischelement 6, bzw. dem zweiten Antriebsmotor 26 zugeordneten Drehwinkelgeber ausgegebenen Drehwinkelposition des zweiten Antriebsmotors 26 in einem Speicher erfolgen. In gleicher Weise kann die maximale Hubhöhe als linearer Positionswert eines dem Mischelement zugeordneten Wegstreckengebers bereit gestellt und abgespeichert werden, welcher den Verfahrweg des Mischelements 6 bei seiner Bewegung zwischen der Schließposition und der Öffnungsposition, bzw. der maximalen Hubhöhe erfasst.
b) Nach dem Abspeichern der maximalen Hubhöhe wird der zweite Antriebsmotor 26 zur Erzeugung eines Schließhubs in Gegenrichtung rotiert und das Mischelement 6 so lange in Richtung der Auslassöffnung 14 verfahren, bis eine maximale Schließposition erreicht ist. Diese wird in gleicher Weise wie die maximale Hubhöhe als digitaler Wert erfasst und abgespeichert.
   Die Schritte a und b bilden eine Referenzfahrt ab, bei deren ordnungsgemäßem Ablauf dann die Freigabe zum Dosieren erfolgt. Hierbei wird die Referenzfahrt bevorzugt bei unbefüllter Mischkammer 2 durchgeführt, wodurch sich der Vorteil ergibt, dass beim Erreichen des Anschlags 32 sowie auch beim Erreichen der maximal möglichen Schließposition keine durch die Viskosität der Komponenten A und B bedingte Veränderung des Motorstroms auftritt, so dass insbesondere die maximal mögliche Schließposition, die sich beim Betrieb der erfindungsgemäßen Vorrichtung 1 mit fortschreitendem Verschleiß des Gleitelements am ringförmigen Aufnahmesitz 14a fortlaufend ändert, mit hoher Präzision durch Messen des Motorstroms ermittelt werden kann. Alternativ kann die maximale Schließposition des Mischelements 6 jedoch im einfachsten Falle dadurch ermittelt werden, dass das Mischelement 6 so lange gegen das Gleitelement gefahren wird, bis das Drehmoment des zweiten Antriebsmotors 26 nicht mehr ausreicht, dieses weiter zu bewegen. Der zugehörige Positionswert wird dann als maximale Schließposition erfasst und abgespeichert.
c) Der in den Schritten a und b erfasste Hubbereich des Referenzhubes kann im Anschluss daran durch entsprechende Hubvorgaben gesteuert und geregelt werden. Dies hat den Vorteil, dass durch einen einfachen Soll-Ist Vergleich ein sicheres Schließen der Auslassöffnung 14 gewährleistet und eine Fehlermeldung ausgegeben werden kann, wenn die Position abzüglich einer Toleranz nicht erreicht wird. Hierdurch kann auf einfache und zuverlässige Weise durch einen Soll-Ist Vergleich des in den Schritten a und b ermittelten Hubbereichs mit einem zuvor abgespeicherten Wert für einen Referenzhubbereich, welcher z.B. bei der Erstinbetriebnahme der Vorrichtung 1 in entsprechender Weise bestimmt wird, erfasst werden, ob das Mischelement 6 in der Mischkammer 2 verklemmt oder verklebt ist und die Freigabeposition nicht erreicht. In diesem Falle kann beispielsweise ein Fehlersignal ausgegeben und die Zufuhr der Komponenten A und B in die Mischkammer 2 unterbunden werden.
d) In einem weiteren Verfahrensschritt kann bei der zuletzt beschriebenen alternativen Ausführungsform des erfindungsgemäßen Verfahrens die durch Verschleiß bedingte Abnutzung der Abdichtung der Auslassöffnung 14, d.h. der Verschleiß des Gleitelements/Gleitrings erfasst werden, an welchem das Mischelement 6 in der maximalen Schließposition anliegt. Hierzu wird die bei der Referenzfahrt gemäß Schritt b) erfasste maximale Schließposition mit einem entsprechenden Schließpositions-Referenzwert verglichen, welcher z.B. bei der erstmaligen Inbetriebnahme der unbenutzten Vorrichtung 1 durch eine entsprechende erste Referenzfahrt bestimmt und in einem Speicher abgespeichert wird.

Die aus den erfassten und abgespeicherten Werten für die maximale Schließposition bei der ersten Referenzfahrt und bei der zuletzt durchgeführten Referenzfahrt durch Differenzbildung ermittelte Hubdifferenz ist ein Maß für die Abnutzung des Gleitelements, bzw. allgemein der Dichtung, welche die Auslassöffnung 14 in der Schließstellung bei anliegendem Mischelement 6 gegen ein Austreten der gemischten Komponenten A und B abdichtet.

Bei einer weiteren Ausführungsform des erfindungsgemäßen Verfahrens kann durch einen weiteren Soll-Ist Vergleich mit einem vorgegebenen maximal zulässigen Wert für die Hubdifferenz zwischen der ersten Referenzfahrt und der zuletzt durch geführten Referenzfahrt vor der Einleitung eines neuen Mischvorgangs eine Warnmeldung ausgegeben werden, welche den Benutzer darauf hinweist, dass der maximal zulässige Verschleiß des Gleitelements/Gleitrings erreicht ist und dieser ersetzt werden muss. Ebenso sind in diesem Falle weitere Maßnahmen, wie z.B. das Sperren der Zufuhr der Komponenten A und B zur Mischkammer 2 ableitbar.

### Liste der Bezugszeichen

- 1: erfindungsgemäße Vorrichtung
- 2: Mischkammer
- 3: Gehäuse, in welchem Mischkammer aufgenommen ist
- 3a: Innenfläche des Gehäuses
- 4a, b: Zufuhrkanäle
- 6: Mischkopf
- 8: erster Motor
- 10: Antriebswelle
- 12: Hubeinrichtung
- 14: Auslassöffnung
- 14a: ringförmiger Aufnahmesitz der Mischkammer
- 20: Hubhülse
- 20a: Gewindeabschnitt an Hubhülse
- 20b: zylindermantelförmige Gleitfläche
- 22a, b: Lager
- 23: Stift, der axial verschiebbare und drehfeste Kopplung mit Mischkammer/Gehäuse bewirkt
- 24: Gewindehülse
- 24a: Gewindeabschnitt an Gewindehülse
- 26: zweiter Antriebsmotor
- 27: Hohlwelle/Antriebswelle des zweiten Antriebsmotors
- 26a: Gehäuse des zweiten Antriebsmotors
- 28: elektronische Steuerungs- und Regelungseinrichtung
- 30: längenveränderliche Kupplung
- 32: Anschlag

- A, B: Komponenten

## Patentansprüche

1. Vorrichtung (1) zum Mischen von zwei- oder mehr Komponenten (A, B), insbesondere eines Kunststoffgemisches, umfassend eine gestellfest in einem Gehäuse (3) aufgenommene Mischkammer (2) mit wenigstens zwei Zufuhrkanälen (4a, 4b), über die die zu vermischenden Komponenten in die Mischkammer (2) zuführbar sind,
ein in der Mischkammer (2) angeordnetes Mischelement (6), welches durch einen ersten Motor (8) über eine Antriebswelle (10) rotierbar ist, und
eine Hubeinrichtung (12), mittels welcher das Mischelement (6) innerhalb der Mischkammer (2) zum Verschließen einer im Bewegungsweg des Mischelements (6) angeordneten Auslassöffnung (14) aus einer Freigabeposition in axialer Richtung relativ zur Mischkammer (2) in eine Schließposition verfahrbar ist,
**dadurch gekennzeichnet, dass**
die Hubeinrichtung (12) eine Hubhülse (20) umfasst, die relativ zur Antriebswelle (10) drehbar und in axialer Richtung gegenüber der Antriebswelle (10) positionsfest über Lager (22a, 22b) an dieser aufgenommen ist, und die in Umfangsrichtung drehfest und in axialer Richtung verschiebbar mit dem Gehäuse (3) gekoppelt ist, wobei die Hubhülse (20) einen Gewindeabschnitt (20a) besitzt, welcher mit einem komplementären Gewindeabschnitt (24a) einer durch einen zweiten, am Gehäuse (3) aufgenommenen Antriebsmotor (26) antreibbaren Gewindehülse (24) in Eingriff ist, die in axialer Richtung positionsfest mit der Antriebswelle (27) des zweiten Antriebsmotors (26) gekoppelt ist und durch deren Drehzentrum hindurch sich die Antriebswelle (10) erstreckt.

2. Vorrichtung nach Anspruch 1,
**dadurch gekennzeichnet, dass**
sich die Antriebswelle (10) des Mischelements (6) durch das Zentrum des zweiten Antriebsmotors (26) hindurch erstreckt, und dass das Gehäuse (26a) des zweiten Antriebsmotors (26) gestellfest mit der Mischkammer (2) gekoppelt ist.

3. Vorrichtung nach Anspruch 1 oder 2,
**dadurch gekennzeichnet, dass**
die Antriebswelle (27) des zweiten Antriebsmotors (26) eine Hohlwelle ist, mit der die Gewindehülse (24) drehfest und in axialer Richtung unverschiebbar gekoppelt ist.

4. Vorrichtung nach einem der vorhergehenden Ansprüche,
**dadurch gekennzeichnet, dass**
die Hubhülse (20) über Radialkugellager (22a, 22b) koaxial auf der Antriebswelle (10) gelagert ist, und dass die Außenseite der Hubhülse (20) eine zylindermantelförmige Gleitfläche (20b) umfasst, über welche sie in axialer Richtung verschiebbar innerhalb einer korrespondierend zur Gleitfläche (20b) ausgefbrmten Innenfläche (3a) eines Gehäuses (3) geführt ist, in welchem die Mischkammer (2) aufgenommen ist.

5. Vorrichtung nach einem der vorhergehenden Ansprüche,
**dadurch gekennzeichnet, dass**
die Gewindehülse (24) ein Innengewinde und die Hubhülse (20) ein Außengewinde aufweist.

6. Vorrichtung nach einem der vorhergehenden Ansprüche,
**dadurch gekennzeichnet, dass**
der erste Antriebsmotor (8) über eine längenveränderliche Kupplung (30) mit dem dem Mischelement (6) gegenüberliegenden Ende der Antriebswelle (10) gekoppelt ist.

7. Vorrichtung nach einem der vorhergehenden Ansprüche,
**dadurch gekennzeichnet, dass**
das Mischelement (6) eine sich in Richtung zur Auslassöffnung (14) hin verjüngende konische Form aufweist, und dass die Auslassöffnung (14) auf der Innenseite der Mischkammer (2) einen ringförmigen Aufnahmesitz (14a) besitzt, in welchem ein Gleitelement, insbesondere ein Gleitring, aufnehmbar ist, auf welchem sich das Mischelement (6) mit seiner Spitze in der Schließposition dichtend abstützt.

8. Vorrichtung nach einem der vorhergehenden Ansprüche,
**dadurch gekennzeichnet, dass**
der erste Antriebsmotor (8) und/oder der zweite Antriebsmotor (26) ein Schrittmotor oder Servomotor ist, der jeweils durch eine elektronische Steuerungs- und Regelungseinrichtung (28) gemäß einem vorgegebenen Geschwindigkeitsprofil antreibbar ist.

9. Vorrichtung nach Anspruch 8
**dadurch gekennzeichnet, dass**
der zweite Antriebsmotor (26) auf der Basis eines extern zugeführten Start- und/oder Stoppsignals einer übergeordneten Maschinensteuerungseinrichtung nach einem vorgegebenen Drehzahlprofil aus der Schließposition in die Freigabeposition und/oder aus der Freigabeposition in die Schließposition verfahrbar ist.

10. Verfahren zur Kalibrierung der Dosiermenge bei einer Vorrichtung nach einem der vorhergehenden Ansprüche mit den folgenden Verfahrensschritten:
a) Verfahren des Mischelements (6) in die Schließposition und Messen des dem zweiten Antriebsmotor (26) zugeführten Motorstroms,
b) Anhalten des zweiten Antriebsmotors (26), wenn der Motorstrom einen vorgegebenen Schwellenwert überschreitet,
c) Abspeichern der Drehposition des zweiten Antriebsmotors (26) als neue Schließposition und
d) Rotieren des zweiten Antriebsmotors (26) in der entgegengesetzten Drehrichtung, um eine vorgegebene Anzahl von Umdrehungen und Abspeichern der Position als neue Freigabeposition.

11. Verfahren nach Anspruch 10,
**dadurch gekennzeichnet, dass**
in der abgespeicherten neuen Freigabeposition der Volumenstrom des aus der Auslassöffnung (14) austretenden gemischten Materials ermittelt und der ermittelte Wert in einem Speicher abgelegt wird.

12. Verfahren zur Kalibrierung der Dosiermenge bei einer Vorrichtung nach einem der vorhergehenden Ansprüche mit den folgenden Verfahrensschritten:
a) Verfahren des Mischelements (6) in eine maximale Öffnungsposition, wobei der Bewegungsweg des Mischelements 6 in der maximalen Öffnungsposition bevorzugt durch einen mechanischen Anschlag (32) begrenzt wird, und Erfassen eines zugehörigen Positionswertes für das Mischelement (6),
b) Verfahren des Mischelements (6) in eine maximale Schließposition, in der die Auslassöffnung durch das Mischelement (6) vollständig verschlossen wird und Erfassen eines zugehörigen Positionswertes für das Mischelement (6),
c) Ermitteln eines Hubbereichs durch Differenzbildung der erfassten Positionswerte für die maximale Öffnungsposition und die maximale Schließposition des Mischelements (6) und
d) Vergleichen des ermittelten Hubbereichs mit einem vorgegebenen, zuvor abgespeicherten Referenzwert für den Hubbereich, welcher vorzugsweise bei einer ersten Inbetriebnahme der Vorrichtung (1) gemäß den Schritten a) bis c) ermittelt wurde.

13. Verfahren nach Anspruch 12,
**dadurch gekennzeichnet, dass**
aus dem ermittelten Hubbereich und dem abgespeicherten Referenzwert für den Hubbereich eine Hubdifferenz bestimmt wird.

14. Verfahren nach Anspruch 13,
**dadurch gekennzeichnet, dass**
eine Fehlermeldung ausgegeben und/oder eine Zufuhr der Komponenten (A, B) in die Mischkammer (2) unterbrochen wird, wenn die Hubdifferenz größer ist als ein vorgegebener maximal zulässiger Wert für die Hubdifferenz.

15. Verfahren nach Anspruch 12 oder 13,
**dadurch gekennzeichnet, dass**
die axiale Position des Mischelements (6) in der Mischkammer (2) zur Ausgabe einer gewünschten Menge an gemischten Komponenten (A, B) auf der Basis der in Verfahrensschritt b) ermittelten maximalen Schließposition und/oder auf Basis der Hubdifferenz verändert wird.

## Claims

1. Apparatus (1) for mixing two or more components (A, B), in particular of a plastics mixture, comprising a mixing chamber (2), which is received in a frame-fixed manner in a housing (3) and has at least two feed channels (4a, 4b) via which the components to be mixed are able to be fed into the mixing chamber (2), a mixing element (6), which is arranged in the mixing chamber (2) and is rotatable by way of a first motor (8) via a drive shaft (10), and a stroke device (12), by means of which the mixing element (6) within the mixing chamber (2) is movable in an axial direction relative to the mixing chamber (2) from a release position into a closed position for the purpose of closing off an outlet opening (14) arranged in the movement path of the mixing element (6),
**characterized in that**
the stroke device (12) comprises a stroke sleeve (20) which is received, so as to be rotatable relative to the drive shaft (10) and so as to be positionally fixed in an axial direction with respect to the drive shaft (10), on said drive shaft via bearings (22a, 22b), and which is coupled to the housing (3) so as to be rotationally fixed in a circumferential direction and so as to be displaceable in an axial direction, wherein the stroke sleeve (20) has a threaded portion (20a) engaging with a complementary threaded portion (24a) of a threaded sleeve (24) which is able to be driven by a second drive motor (26) received on the housing (3) and which is coupled to the drive shaft (27) of the second drive motor (26) so as to be positionally fixed in an axial direction and through the centre of rotation of which the drive shaft (10) extends.

2. Apparatus according to Claim 1,
**characterized in that**
the drive shaft (10) of the mixing element (6) extends through the centre of the second drive motor (26), and **in that** the housing (26a) of the second drive motor (26) is coupled in a frame-fixed manner to the mixing chamber (2).

3. Apparatus according to Claim 1 or 2,
**characterized in that**
the drive shaft (27) of the second drive motor (26) is a hollow shaft to which the threaded sleeve (24) is coupled rotationally conjointly and so as to be non-displaceable in an axial direction.

4. Apparatus according to one of the preceding claims,
**characterized in that**
the stroke sleeve (20) is mounted coaxially on the drive shaft (10) via radial ball bearings (22a, 22b), and **in that** the outer side of the stroke sleeve (20) comprises a sliding surface (20b) in the form of a cylinder casing, via which it is guided in an axially displaceable manner within an inner surface (3a), formed in a manner corresponding to the sliding surface (20b), of a housing (3) in which the mixing chamber (2) is received.

5. Apparatus according to one of the preceding claims,
**characterized in that**
the threaded sleeve (24) has an inner thread, and the stroke sleeve (20) has an outer thread.

6. Apparatus according to one of the preceding claims,
**characterized in that**
the first drive motor (8) is coupled via a length-adjustable coupling (30) to that end of the drive shaft (10) which is situated opposite the mixing element (6).

7. Apparatus according to one of the preceding claims,
**characterized in that**
the mixing element (6) has a conical shape which narrows in the direction towards the outlet opening (14), and **in that** the outlet opening (14), on the inner side of the mixing chamber (2), has an annular receiving seat (14a) in which a sliding element, in particular a sliding ring, on which the mixing element (6) is supported in a sealing manner at its tip in the closed position is able to be received.

8. Apparatus according to one of the preceding claims,
**characterized in that**
the first drive motor (8) and/or the second drive motor (26) is a stepper motor or servo motor that is in each case able to be driven by an electronic control and regulation device (28) according to a predefined speed profile.

9. Apparatus according to Claim 8,
**characterized in that**
the second drive motor (26) is able to be moved on the basis of an externally supplied start and/or stop signal of a higher-level machine control device according to a predefined rotational speed profile from the closed position into the release position and/or from the release position into the closed position.

10. Method for calibrating the dosing quantity for an apparatus according to one of the preceding claims, comprising the following method steps:
a) moving the mixing element (6) into the closed position and measuring the motor current fed to the second drive motor (26),
b) stopping the second drive motor (26) when the motor current exceeds a predefined threshold value,
c) storing the rotational position of the second drive motor (26) as the new closed position, and
d) rotating the second drive motor (26) in the opposite direction of rotation by a predefined number of revolutions and storing the position as the new release position.

11. Method according to Claim 10,
**characterized in that**,
in the stored new release position, the volumetric flow rate of the mixed material exiting from the outlet opening (14) is ascertained and the ascertained value is stored in a memory.

12. Method for calibrating the dosing quantity for an apparatus according to one of the preceding claims, comprising the following method steps:
a) moving the mixing element (6) into a maximum open position, wherein the movement path of the mixing element (6) in the maximum open position is preferably limited by a mechanical stop (32), and detecting an associated position value for the mixing element (6),
b) moving the mixing element (6) into a maximum closed position, in which the outlet opening is completely closed by the mixing element (6), and detecting an associated position value for the mixing element (6),
c) ascertaining a stroke range by calculating the difference between the detected position value for the maximum open position and for the maximum closed position of the mixing element (6), and
d) comparing the ascertaining stroke range with a predefined, previously stored reference value for the stroke range, which has preferably been ascertained according to steps a) to c) during a first start-up of the apparatus (1).

13. Method according to Claim 12,
**characterized in that**
a stroke difference is determined from the ascertained stroke range and the stored reference value for the stroke range.

14. Method according to Claim 13,
**characterized in that**
an error message is output and/or feeding of the components (A, B) into the mixing chamber (2) is interrupted if the stroke difference is greater than a predefined maximum permissible value for the stroke difference.

15. Method according to Claim 12 or 13,
**characterized in that**
the axial position of the mixing element (6) in the mixing chamber (2), for discharging a desired quantity of mixed components (A, B), is adjusted on the basis of the maximum closed position ascertained in method step b) and/or on the basis of the stroke difference.

## Revendications

1. Dispositif (1) pour mélanger deux constituants (A, B) ou plus, en particulier d'un mélange de matières synthétiques, comprenant une chambre de mélange (2) reçue de manière solidaire d'un bâti dans un carter (3) et dotée d'au moins deux canaux d'acheminement (4a, 4b), par le biais desquels les constituants à mélanger peuvent être acheminés à la chambre de mélange (2), un élément de mélange (6) disposé dans la chambre de mélange (2), lequel peut être entraîné en rotation par un premier moteur (8) par le biais d'un arbre d'entraînement (10), et un dispositif de va-et-vient (12), au moyen duquel l'élément de mélange (6) peut être déplacé à partir d'une position de libération dans la direction axiale par rapport à la chambre de mélange (2) jusqu' à une position de fermeture à l'intérieur de la chambre de mélange (2) pour la fermeture d'une ouverture de sortie (14) disposée dans le trajet de déplacement de l'élément de mélange (6),
**caractérisé en ce que**
le dispositif de va-et-vient (12) comprend une douille de va-et-vient (20) qui est reçue sur l'arbre d'entraînement (10) de manière rotative par rapport à celui-ci et de manière fixe en position dans la direction axiale par rapport à l'arbre d'entraînement (10) par le biais de paliers (22a, 22b), et qui est accouplée au carter (3) de manière solidaire en rotation dans la direction circonférentielle et de manière mobile dans la direction axiale, la douille de va-et-vient (20) possédant une partie filetée (20a), laquelle est en prise avec une partie filetée complémentaire (24a) d'une douille filetée (24) pouvant être entraînée par un deuxième moteur d'entraînement (26) reçu sur le carter (3), laquelle douille filetée est accouplée de manière fixe en position dans la direction axiale à l'arbre d'entraînement (27) du deuxième moteur d'entraînement (26) et à travers le centre de rotation de laquelle s'étend l'arbre d'entraînement (10).

2. Dispositif selon la revendication 1,
**caractérisé en ce que**
l'arbre d'entraînement (10) de l'élément de mélange (6) s'étend à travers le centre du deuxième moteur d'entraînement (26), et **en ce que** le carter (26a) du deuxième moteur d'entraînement (26) est accouplé à la chambre de mélange (2) de manière solidaire d'un bâti.

3. Dispositif selon la revendication 1 ou 2,
**caractérisé en ce que**
l'arbre d'entraînement (27) du deuxième moteur d'entraînement (26) est un arbre creux auquel la douille filetée (24) est accouplée de manière solidaire en rotation et de manière non mobile dans la direction axiale.

4. Dispositif selon l'une des revendications précédentes,
**caractérisé en ce que**
la douille de va-et-vient (20) est montée coaxialement sur l'arbre d'entraînement (10) par le biais de paliers à billes radiaux (22a, 22b), et **en ce que** le côté extérieur de la douille de va-et-vient (20) comprend une surface de glissement (20b) en forme d'enveloppe cylindrique, par le biais de laquelle elle est guidée de manière mobile dans la direction axiale à l'intérieur d'une surface intérieure (3a), formée de manière correspondante à la surface de glissement (20b), d'un carter (3) dans lequel la chambre de mélange (2) est reçue.

5. Dispositif selon l'une des revendications précédentes,
**caractérisé en ce que**
la douille filetée (24) présente un filetage intérieur et la douille de va-et-vient (20) présente un filetage extérieur.

6. Dispositif selon l'une des revendications précédentes,
**caractérisé en ce que**
le premier moteur d'entraînement (8) est accouplé par le biais d'un accouplement (30) de longueur modifiable à l'extrémité de l'arbre d'entraînement (10) opposée à l'élément de mélange (6).

7. Dispositif selon l'une des revendications précédentes,
**caractérisé en ce que**
l'élément de mélange (6) présente une forme conique se rétrécissant en direction de l'ouverture de sortie (14), et **en ce que** l'ouverture de sortie (14) possède, sur le côté intérieur de la chambre de mélange (2), un siège de réception annulaire (14a) dans lequel un élément de glissement, en particulier une bague de glissement, peut être reçu(e), siège sur lequel l'élément de mélange (6) s'appuie de manière étanche par sa pointe dans la position de fermeture.

8. Dispositif selon l'une des revendications précédentes,
**caractérisé en ce que**
le premier moteur d'entraînement (8) et/ou le deuxième moteur d'entraînement (26) est/sont un moteur pas à pas ou un servomoteur qui peut être entraîné respectivement par un dispositif électronique de commande et de régulation (28) selon un profil de vitesse prédéfini.

9. Dispositif selon la revendication 8,
**caractérisé en ce que**
le deuxième moteur d'entraînement (26) peut être déplacé de la position de fermeture à la position de libération et/ou de la position de libération à la position de fermeture sur la base d'un signal de marche et/ou d'arrêt acheminé de manière externe d'un dispositif de commande de machine prioritaire selon un profil de vitesse de rotation prédéfini.

10. Procédé pour l'étalonnage de la quantité de dosage dans un dispositif selon l'une des revendications précédentes, présentant les étapes de procédé suivantes :
a) déplacement de l'élément de mélange (6) dans la position de fermeture et mesure du courant de moteur acheminé au deuxième moteur d'entraînement (26),
b) arrêt du deuxième moteur d'entraînement (26) lorsque le courant de moteur dépasse une valeur seuil prédéfinie,
c) enregistrement de la position de rotation du deuxième moteur d'entraînement (26) comme nouvelle position de fermeture et
d) rotation du deuxième moteur d'entraînement (26) dans le sens de rotation inverse, d'un nombre prédéfini de tours, et enregistrement de la position comme nouvelle position de libération.

11. Procédé selon la revendication 10,
**caractérisé en ce que**,
dans la nouvelle position de libération enregistrée, le débit volumique de la matière mélangée sortant de l'ouverture de sortie (14) est déterminé et la valeur déterminée est mémorisée dans une mémoire.

12. Procédé pour l'étalonnage de la quantité de dosage dans un dispositif selon l'une des revendications précédentes, présentant les étapes de procédé suivantes :
a) déplacement de l'élément de mélange (6) dans une position d'ouverture maximale, le trajet de déplacement de l'élément de mélange (6) dans la position d'ouverture maximale étant limité de préférence par une butée mécanique (32), et détection d'une valeur de position associée pour l'élément de mélange (6),
b) déplacement de l'élément de mélange (6) dans une position de fermeture maximale, dans laquelle l'ouverture de sortie est fermée complètement par l'élément de mélange (6) et détection d'une valeur de position associée pour l'élément de mélange (6),
c) détermination d'une plage de va-et-vient par différence entre les valeurs de position détectées pour la position d'ouverture maximale et la position de fermeture maximale de l'élément de mélange (6) et
d) comparaison de la plage de va-et-vient déterminée avec une valeur de référence prédéfinie préalablement enregistrée pour la plage de va-et-vient, laquelle a été déterminée de préférence lors d'une première mise en marche du dispositif (1) selon les étapes a) à c).

13. Procédé selon la revendication 12,
**caractérisé en ce**
**qu'**une différence de va-et-vient est déterminée à partir de la plage de va-et-vient déterminée et de la valeur de référence enregistrée pour la plage de va-et-vient.

14. Procédé selon la revendication 13,
**caractérisé en ce**
**qu'**un message d'erreur est délivré et/ou un acheminement des constituants (A, B) dans la chambre de mélange (2) est interrompu lorsque la différence de va-et-vient est supérieure à une valeur admissible maximale prédéfinie pour la différence de va-et-vient.

15. Procédé selon la revendication 12 ou 13,
**caractérisé en ce que**
la position axiale de l'élément de mélange (6) dans la chambre de mélange (2) est modifiée pour la distribution d'une quantité souhaitée de constituants mélangés (A, B) sur la base de la position de fermeture maximale déterminée à l'étape de procédé b) et/ou sur la base de la différence de va-et-vient.
